# EUROPÄISCHE PATENTSCHRIFT

(11) **EP 1 337 319 B1**
(45) Veröffentlichungstag und Bekanntmachung des Hinweises auf die Patenterteilung: **27.12.2006**
(21) Anmeldenummer: 01978444.6
(22) Anmeldetag: 20.10.2001
(51) Int. Cl.: B01D 71/68, B01D 71/58, B01D 71/62

(54) **NEUE MEMBRANEN FÜR DEN EINSATZ IN BRENNSTOFFZELLEN MIT EINER VERBESSERTEN MECHANIK**
NOVEL MEMBRANES HAVING IMPROVED MECHANICAL PROPERTIES, FOR USE IN FUEL CELLS
NOUVELLES MEMBRANES PRESENTANT DE MEILLEURES PROPRIETES MECANIQUES, DESTINEES A UN USAGE DANS DES PILES A COMBUSTIBLE

(30) Priorität: 21.10.2000 DE 10052242
(43) Veröffentlichungstag der Anmeldung: 27.08.2003
(73) Patentinhaber: Pemeas GmbH, 65926 Frankfurt am Main (DE)
(72) Erfinder: SOCZKA-GUTH, Thomas, 89601 Schelklingen (DE); KIEFER, Joachim, 65510 Idstein (DE); JORDT, Frauke, 65817 Eppstein (DE)
(74) Vertreter: Luderschmidt, Schüler & Partner
(86) Internationale Anmeldenummer: PCT/EP2001/012147
(87) Internationale Veröffentlichungsnummer: WO 2002/036249

(56) Entgegenhaltungen:
- DE-A- 19 817 374
- US-A- 4 260 652

## Beschreibung

Mit Säure dotierte, ein- oder mehrschichtige Kunststoffmembran mit Schichten aufweisend Polymerblends umfassend Polymere mit wiederkehrenden Azoleinheiten, Verfahren zur Herstellung solcher Kunststoffmembranen sowie deren Verwendung

Die vorliegende Erfindung betrifft das Gebiet der Kunststoffmembranen. Insbesondere bezieht sich die Erfindung auf eine mit Säure dotierte Kunststoffmembran. Daneben betrifft die Erfindung ein Verfahren zur Herstellung der dotierten Kunststoffmembran sowie deren Verwendung.

Die erfindungsgemäße dotierte Kunststoffmembran kann vielfältig eingesetzt werden. Aufgrund ihrer hervorragenden mechanischen Eigenschaften ist sie insbesondere als Polymermembran in Brennstoffzellen von Bedeutung.

Polyazol-Membranen für den Einsatz in Brennstoffzellen sind bereits bekannt. Die basischen Membranen werden mit konzentrierter Phosphorsäure oder Schwefelsäure dotiert und dienen als Protonenleiter in sogenannten Polyelektrolyt-Membran-Brennstoffzellen (PEM-Brennstoffzellen). Dabei erlauben solche Membranen einen Betrieb der Membran-Elektroden-Einheit (MEE) zwischen 100°C und 200°C und steigern auf diese Weise die Toleranz des Katalysators gegenüber dem bei der Reformierung als Nebenprodukt entstehenden Kohlenmonoxid deutlich, so daß die Gasaufbereitung bzw. Gasreinigung wesentlich vereinfacht wird. Nachteilig an diesen Membranen ist ihre mechanische Instabilität mit einem geringen E-Modul, einer geringen Reißfestigkeit und einer niedrigen oberen Fließgrenze sowie ihre relativ hohe Permeabilität für Wasserstoff und Sauerstoff. Kerres, J. et al. (Kerres, Jochen; Ullrich, Andreas; Meier, Frank; Häring, Thomas *"Synthesis and characterization of novel-acid-base polymer blends for application in membrane fuell cells"* Solid State lonics 125, 243 bis 249, 1999) stellen Membranen aus sulfonierten Polyetheretherketon sPEEK ^{®}Victrex oder Polyethersulfon sPSU ^{®}Udel und in ortho-Position zur Sulfon-Brücke diaminierten PSU ^{®}Udet, Poly(4-Vinylpyridin), Poly(benzimidazol) PBI ^{®}Celazole oder Poly(ethylenimin) PEI zur Verfügung. Diese Membranen zeigen gute Protonenleitfähigkeiten bei einer Austauschkapazität IEC von 1 (IEC =meq SO₃H/g trockene Membran) und eine gute thermische Stabilität. Nachteilig ist jedoch, daß unter Normaldruck oberhalb von 100°C durch den Verlust von Wasser die Leitfähigkeit der Membranen zusammenbricht. Daher können diese Membranen in Brennstoffzellen oberhalb von 100°C unter Normaldruck nicht eingesetzt werden.

Aus DE-A-19817374 sind Polymerblends aus einer polymeren Säure und einem basischen Polymer bekannt.

Aus WO 01/18894 sind sulfonierte Polysulfone und Blends mit Polybenzimidazolen bekannt.

In Anbetracht des Standes der Technik ist es nun Aufgabe der vorliegenden Erfindung, eine dotierte Kunststoffmembran mit verbesserten Eigenschaften zur Verfügung zu stellen. Die erfindungsgemäße Kunststoffmembran soll gute Protonenleitfähigkeiten und geringe Permeabilität für Wasserstoff und Sauerstoff zeigen.

Eine weitere Aufgabe bestand darin, eine dotierte Kunststoffmembran anzugeben, die in Brennstoffzellen verwendet werden kann. Insbesondere soll die dotierte Kunststoffmembran für den Einsatz in Brennstoffzellen oberhalb von 100°C unter Normaldruck geeignet sein.

Aufgabe der Erfindung war auch ein Verfahren zur Herstellung der dotierten Kunststoffmembran zur Verfügung zu stellen, das auf einfache Art und Weise, kostengünstig und großtechnisch durchführbar ist.

Gelöst werden diese sowie weitere nicht explizit genannten Aufgaben, die jedoch aus den hierin einleitend diskutierten Zusammenhängen ohne weiteres ableitbar oder erschließbar sind, durch eine mit Säure dotierte Kunststoffmembran mit allen Merkmalen des Patentanspruchs 1. Zweckmäßige Abwandlungen der erfindungsgemäßen dotierten Kunststoffmembran werden in den auf Anspruch 1 rückbezogenen Unteransprüchen unter Schutz gestellt. Ein Verfahren zur Herstellung der erfindungsgemäßen dotierten Kunststoffmembran, wird im Verfahrensanspruch beschrieben, während die Ansprüche der Verwendungskategorie bevorzugte Verwendungen einer erfindungsgemäßen dotierten Kunststoffmembran schützen.

Dadurch, daß man eine mit Säure dotierte, ein- oder mehrschichtige Kunststoffmembran aufweisend mindestens eine Schicht A aus einem Polymerblend bestehend aus
a) 0,1 bis 99,9 Gew.-% von einem oder mehreren Polymeren, die wiederkehrende Azoleinheiten der allgemeinen Formel 1A und/oder 1 B aufweisen: 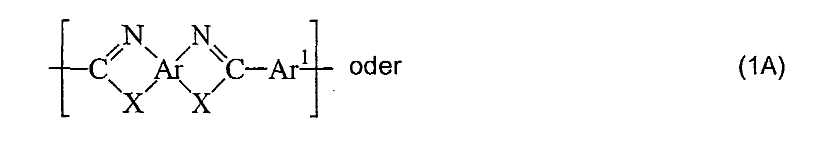 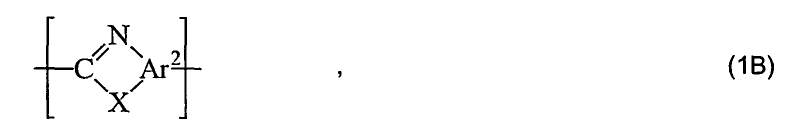 wobei die Reste Ar, Ar¹ und Ar² vier-, zwei- bzw. dreibindige aromatische oder heteroaromatische Gruppen und die Reste X, die innerhalb einer Wiederholungseinheit gleich sind, ein Sauerstoffatom, ein Schwefelatom oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt, sind,
   in Mischung mit
b) 99,9 bis 0,1 Gew.-% eines Polysulfons mit wiederkehrenden Einheiten der allgemeinen Formel 2A, 2B, 2C, 2D, 2E, 2F und/oder 2G, das keine Sulfonsäuregruppen aufweist:

   -O-R-SO₂-R- (2A)

   -O-R-SO₂-R-O-R- (2B)

   -O-R-SO₂-R-O-R-R- (2C)

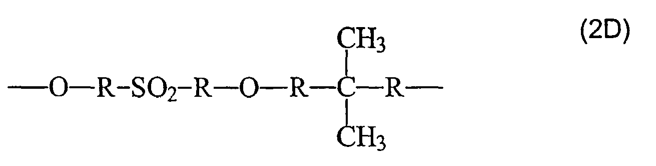

   -O-R-SO₂-R-R-SO₂-R- (2E)

   -O-R-SO₂-R-R-SO₂-R-O-R-SO₂⁆ (2F)

   ⁅O-R-SO₂-R⁆⁅SO₂-R-R⁆ (2G),
worin die Reste R unabhängig voneinander gleich oder verschieden 1,2-Phenylen, 1,3-Phenylen, 1,4-Phenylen, 4,4'-Biphenyl, ein zweiwertiger Rest eines Heteroaromaten, ein zweiwertiger Rest eines C₁₀-Aromaten und/oder ein zweiwertiger Rest eines C₁₄-Aromaten sind,
zur Verfügung stellt, gelingt es auf nicht ohne weiteres vorhersehbare Weise eine dotierte Kunststoffmembran mit verbesserten mechanischen Eigenschaften, insbesondere einem höheren E-Modul und verbesserter Bruchfestigkeit zugänglich zu machen.

Zugleich zeigen die erfindungsgemäßen dotierten Kunststoffmembranen eine Reihe weiterer Vorteile. Hierzu gehören unter anderem:
⇒ Die dotierten Kunststoffmembranen zeigen gute Protonenleitfähigkeiten.
⇒ Die dotierten Kunststoffmembranen besitzen nur eine geringe Permeabilität für Wasserstoff und Sauerstoff.
⇒ Selbst eine extrem dünne, dotierte Kunststoffmembran mit einer Gesamtdicke zwischen 10 und 100 µm besitzt hinreichend gute Materialeigenschaften bei 100°C, insbesondere eine sehr hohe mechanische Stabilität und eine geringe Permeabilität für Wasserstoff und Sauerstoff.
⇒ Das Eigenschaftsprofil der dotierten Kunststoffmembran läßt sich durch einen mehrschichtigen Aufbau weiter verbessern.
⇒ Die dotierte Kunststoffmembran ist für den Einsatz in Brennstoffzellen oberhalb von 100°C, insbesondere unter Normaldruck, geeignet.
⇒ Durch teilweisen Ersatz des vergleichsweise teuren Polyazols durch vergleichweise billigeres Polysulfon wird eine dotierte Kunststoffmembran zur Verfügung gestellt, die preisgünstiger herstellbar ist.
⇒ Die dotierte Kunststoffmembran ist auf einfache Art und Weise und großtechnisch herstellbar.

Gemäß der vorliegenden Erfindung weist die Kunststoffmembran mindestens eine Schicht A aus einem Polymerblend auf, welches 0,1 bis 99,9 Gew.-% von einem oder mehreren Polymeren, die wiederkehrende Azoleinheiten der allgemeinen Formel 1A und/oder 1B aufweisen: 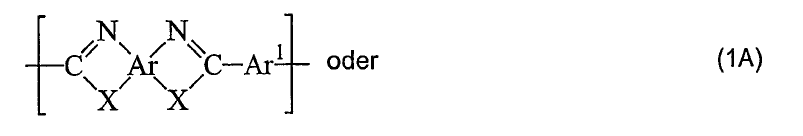 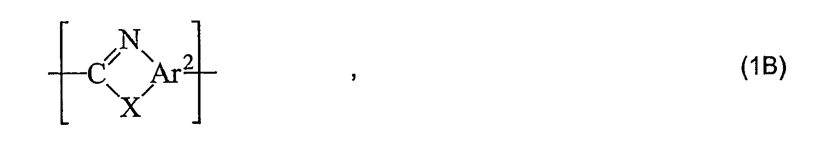 enthält. Die Reste Ar, Ar¹ und Ar² sind vier-, zwei- bzw. dreibindige aromatische oder heteroaromatische Gruppen, die ein- oder mehrkernig sein können. Bevorzugte Gruppen leiten sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren, die gegebenenfalls auch substituiert sein können, ab. Dabei ist das Substitionsmuster von Ar¹ beliebig, im Falle vom Phenylen beispielsweise kann Ar¹ ortho-, meta- und para-Phenylen sein. Besonders bevorzugte Gruppen leiten sich von Benzol und Biphenylen, die gegebenenfalls auch substituiert sein können, ab.

Die Reste X sind ein Sauerstoffatom (Benzoxaleinheit), ein Schwefelatom (Benzthiazoleinheit) oder eine Aminogruppe (Benzimidazoleinheit), die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt. Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen. Bevorzugte aromatische Gruppen sind Phenyl- oder Naphthyl-Gruppen. Die Alkylgruppen und die aromatischen Gruppen können substituiert sein. Bevorzugte Substituenten sind Halogenatome wie z. B. Fluor, Aminogruppen oder kurzkettige Alkylgruppen wie z. B. Methyl- oder Ethylgruppen.

Sofern im Rahmen der vorliegenden Erfindung Polyazole mit wiederkehrenden Einheiten der Form (1A) eingesetzt werden, sollen die Reste X innerhalb einer wiederkehrenden Einheit gleich sein.

Ein erfindungsgemäßes Polyalzol kann grundsätzlich auch unterschiedliche wiederkehrende Einheiten aufweisen, die sich beispielsweise in ihrem Rest X unterscheiden. Vorzugsweise jedoch weist es nur gleiche wiederkehrende Einheiten auf.

In einer bevorzugten Ausführungsform der vorliegenden Erfindung ist das Polymer enthaltend wiederkehrende Azoleinheiten ein Copolymer, das mindestens zwei Einheiten der Formel (1A) und/oder (1 B) enthält, die sich voneinander unterscheiden.

In einer besonders bevorzugten Ausführungsform der vorliegenden Erfindung ist das Polymer enthaltend wiederkehrende Azoleinheiten ein Polyazol, das nur Einheiten der Formel (1A) und/oder (1B) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung werden Polymere enthaltend wiederkehrenden Benzimidazoleinheiten bevorzugt eingesetzt. Ein Beispiel eines äußerst zweckmäßigen Polymers enthaltend wiederkehrende Benzimidazoleinheiten wird durch Formel (1C) wiedergegeben: 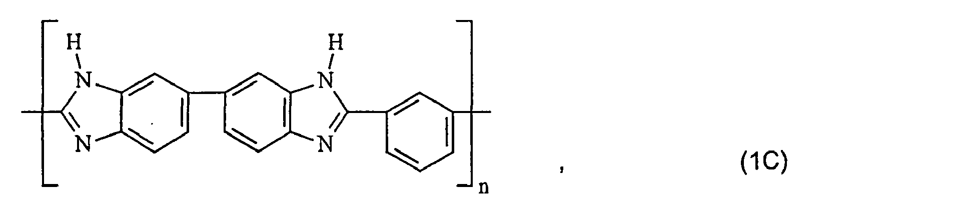 wobei n eine ganze Zahl größer gleich 10, vorzugsweise größer gleich 100 ist.

Gemäß der vorliegenden Erfindung enthält das Polymerblend 99,9 bis 0,1 Gew.-% eines Polysulfons, das keine Sulfonsäuregruppen aufweist. Dabei weist das Polysulfon wiederkehrende Einheiten mit verknüpfenden Sulfon-Gruppen entsprechend den allgemeinen Formeln 2A, 2B, 2C, 2D, 2E, 2F und/oder 2G auf:

-O-R-SO₂-R- (2A)

-O-R-SO₂-R-O-R- (2B)

-O-R-SO₂-R-O-R-R- (2C)

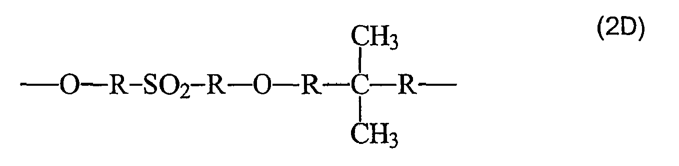

-O-R-SO₂-R-R-SO₂-R- (2E)

-O-R-SO₂-R-R-SO₂-R-O-R-SO₂⁆ (2F)

⁅O-R-SO₂-R⁆⁅SO₂-R-R⁆ (2G),

worin die Reste R unabhängig voneinander gleich oder verschieden 1,2-Phenylen, 1,3-Phenylen, 1,4-Phenylen, 4,4'-Biphenyl, ein zweiwertiger Rest eines Heteroaromaten, ein zweiwertiger Rest eines C₁₀-Aromaten und/oder ein zweiwertiger Rest eines C₁₄-Aromaten sind. Beispiele für Heteroaromaten sind Pyridin und Chinolin. Ein Beispiel für einen C₁₀-Aromaten ist Naphthalin, für einen C₁₄-Aromaten Phenanthren.

Zu den im Rahmen der vorliegenden Erfindung bevorzugten Polysulfone gehören Homo- und Copolymere, beispielsweise statistische Copolymere, wie ^{®}Victrex 720 P und ^{®}Astrel an. Besonders bevorzugte Polysulfone sind: 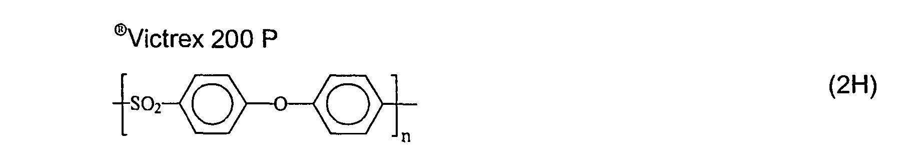 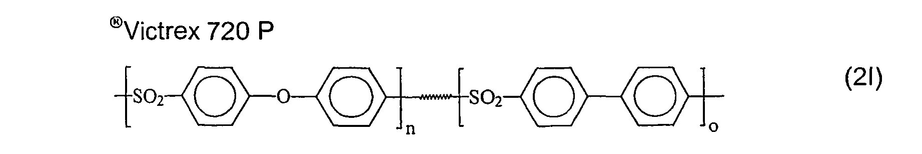 mit n>o 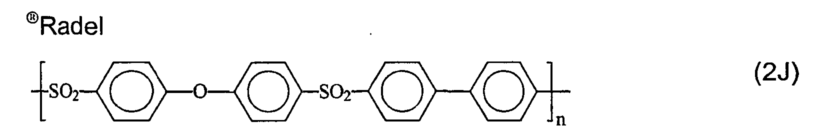 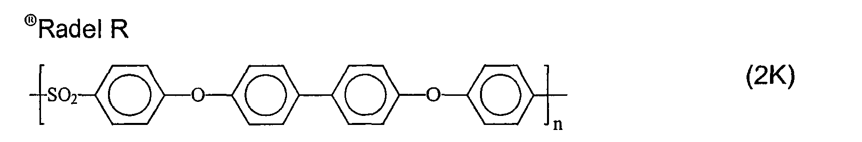 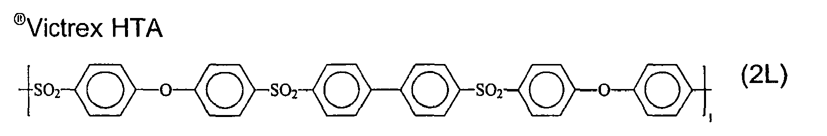 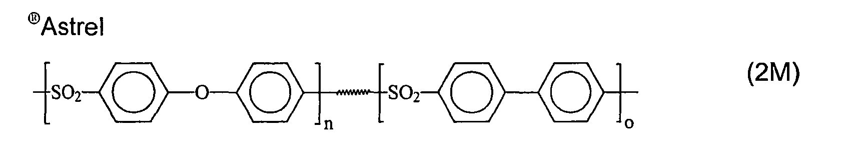 mit n<o

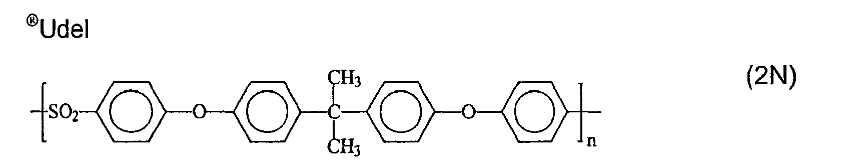

Ein ganz besonders bevorzugtes Polysulfon ist ^{®}Radel R.

Die erfindungsgemäß einsetzbaren Polysulfone können gegebenenfalls substituiert sein. Sie dürfen jedoch weder protonierte Sulfonsäuregruppen

-SO₃H (3),

noch protonierbare Sulfonsäuresalz-Gruppen

-SO₃⁻M⁺ (4),

wobei M⁺ ein anorganisches oder organisches Kation ist, aufweisen, weil diese die mechanischen Eigenschaften der dotierten Kunststoffmembran verschlechtern können.

In einer bevorzugten Ausführungsform der vorliegenden Erfindung sind die Polysulfone nicht substituiert.

In noch einer bevorzugten Ausführungsform der vorliegenden Erfindung ist das Zahlenmittel des Molekulargewichts von den Polysulfonen größer als 30.000 g/mol.

Die erfindungsgemäßen Kunststoffmembranen sind dotiert. Im Rahmen der vorliegenden Erfindung bezeichnen dotierte Kunststoffmembranen solche Kunststoffmembranen, die aufgrund der Gegenwart von Dotierungsmitteln eine erhöhte Protonenleitfähigkeit im Vergleich mit den nicht dotierten Kunststoffmembranen zeigen. Dotierungsmittel für die erfindungsgemäßen Kunststoffmembranen sind Säuren. Säuren umfassen in diesem Zusammenhang alle bekannten Lewis- und Brønsted-Säuren, vorzugsweise anorganische Lewis- und Brønsted-Säuren. Weiterhin ist auch der Einsatz von Polysäuren möglich, insbesondere Isopolysäuren und Heteropolysäuren sowie von Mischungen verschiedener Säuren. Dabei bezeichnen im Sinne der vorliegenden Erfindung Heteropolysäuren anorganische Polysäuren mit mindestens zwei verschiedenen Zentralatomen, die aus jeweils schwachen, mehrbasischen Sauerstoff-Säuren eines Metalls (vorzugsweise Cr, Mo, V, W) und eines Nichtmetalls (vorzugsweise As, I, P, Se, Si, Te) als partielle gemischte Anhydride entstehen. Zu ihnen gehören unter anderen die 12-Molybdatophosphorsäure und die 12-Wolframatophosphorsäure.

Erfindungsgemäß besonders bevorzugte Dotierungsmittel sind Schwefelsäure und Phosphorsäure. Ein ganz besonders bevorzugtes Dotierungsmittel ist Phosphorsäure (H₃PO₄).

Über den Dotierungsgrad kann die Leitfähigkeit der erfindungsgemäßen Kunststoffmembran beeinflußt werden. Dabei nimmt die Leitfähigkeit mit steigender Konzentration an Dotierungsmittel solange zu, bis ein maximaler Wert erreicht ist. Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 15, insbesondere zwischen 6 und 12, bevorzugt.

Das Eigenschaftsspektrum der erfindungsgemäßen Kunststoffmembran kann durch Variation ihrer Zusammensetzung verändert werden. In einer bevorzugten Ausführungsform der vorliegenden Erfindung besteht das Polymerblend aus
a) 50 bis 99 Gew.-% Polymer, das wiederkehrende Azoleinheiten der allgemeinen Formel 1A und/oder 1B aufweist,
   in Mischung mit
b) 1 bis 50 Gew.-% eines Polysulfons, das keine Sulfonsäuregruppen aufweist.

In einer besonders bevorzugten Ausführungsform der vorliegenden Erfindung besteht das Polymerblend aus
a) 70 bis 95 Gew.-% Polymer, das wiederkehrende Azoleinheiten der allgemeinen Formel 1A und/oder 1B aufweist,
   in Mischung mit
b) 5 bis 30 Gew.-% eines Polysulfons, das keine Sulfonsäuregruppen aufweist.

Die dotierte Kunststoffmembran hat einen ein- oder mehrschichtigen Aufbau. Durch einen mehrschichtigen Aufbau können ihre Materialeigenschaften, wie beispielsweise der E-Modul, die Zugfestigkeit und die Protonenleitfähigkeit in gewünschter Art und Weise variiert werden. Vorzugsweise weist die erfindungsgemäße Kunststoffmembran mindestens zwei Schichten A und B auf, die jeweils aus dem erfindungsgemäßen Polymerblend erhältlich sind und sich im Gehalt an Polysulfon b) voneinander unterscheiden. Darüber hinaus ist besonders vorteilhaft, wenn sich auch die Dicken der beiden Schichten A und B unterscheiden.

Erfindungsgemäß besonders bevorzugt wird eine dotierte Kunststoffmembran, die mindestens drei Schichten A, B und C aufweist, die jeweils aus dem erfindungsgemäßen Polymerblend erhältlich sind, wobei sich die mittlere Schicht C von den beiden äußeren Schichten A und B im Gehalt an Polysulfon b) unterscheidet. Eine Variation der Schichtdicken kann ebenfalls vorteilhaft sein. In einer besonders bevorzugten Ausführungsform der vorliegenden Erfindung besteht die dotierte Kunststoffmembran aus drei Schichten A, B und C. Dabei sind die äußeren Schichten A und B dünner als die mittlere Schicht C und weisen einen höheren Polysulfongehalt b) als die mittlere Schicht C auf. In einer ganz besonders bevorzugten Ausführungsform der vorliegenden Erfindung enthält die mittlere Schicht C kein Polysulfon.

Die Eigenschaften der erfindungsgemäßen Kunststoffmembran können zum Teil durch ihre Gesamtdicke gesteuert werden. Jedoch besitzen auch äußerst dünne Kunststoffmembranen schon sehr gute mechanische Eigenschaften und eine geringere Permeabilität für Wasserstoff und Sauerstoff. Daher sind sie für den Einsatz in Brennstoffzellen oberhalb von 100°C, insbesondere für den Einsatz in Brennstoffzellen oberhalb von 120°C geeignet, ohne daß der Randbereich der Membran-Elektroden-Einheit verstärkt werden muß. Vorzugsweise beträgt die Gesamtdicke der erfindungsgemäßen, dotierten Kunststoffmembran zwischen 5 und 100 µm, zweckmäßigerweise zwischen 10 und 90 µm, insbesondere zwischen 20 und 80 µm.

Die erfindungsgemäße Kunststoffmembran weist verbesserte Materialeigenschaften gegenüber den bisher bekannten dotierten Kunststoffmembranen auf. Insbesondere besitzen sie sehr gute mechanische Eigenschaften und eine geringen Permeabilität für Wasserstoff und Sauerstoff. In einer besonders bevorzugten Ausführungsform der vorliegenden Erfindung liegt ihre Protonenleitfähigkeit bei Raumtemperatur oberhalb von 30 mS/cm und ihr E-Modul nach 10 Minuten bei 100°C ist größer als 10 MPa.

Verfahren zur Herstellung von dotierten Kunststoffmembran sind bekannt. In einer bevorzugten Ausführungsform der vorliegenden Erfindung werden sie erhalten, indem man ein erfindungsgemäßes Polymerblend eine geeignete Zeit, vorzugsweise 0,5 - 96 Stunden, besonders bevorzugt 1 - 72 Stunden, bei Temperaturen zwischen Raumtemperatur und 100°C und gegebenenfalls erhöhtem Druck mit konzentrierter Säure, vorzugsweise mit hochkonzentrierter Phosphorsäure benetzt.

Im Rahmen der vorliegenden Erfindung bezeichnen "Polymerblends" physikalische Mischungen von Polymeren. Verfahren zur Herstellung von Polymerblends sind bekannt. Sie können beispielsweise aus einer die zu blendenden Polymere enthaltenden Lösung durch Abdampfen des Lösungsmittels erhalten werden. Vorzugsweise wird das Abdampfen des Lösungsmittels auf eine Art und Weise durchgeführt, daß man einen freitragenden und vorzugsweise transparenten Film erhält. Im Rahmen der vorliegenden Erfindung werden N,N-Dimethylacetamid, N,N-Dimethylformamid, Dimethylsulfoxid, N-Methylpyrrolidon oder Mischungen der genannten Lösungsmittel bevorzugt eingesetzt.

Zu möglichen Einsatzgebieten der erfindungsgemäßen, dotierten Kunststoffmembranen gehören unter anderem die Verwendung in Brennstoffzellen, bei der Elektrolyse, in Kondensatoren und in Batteriesystemen. Aufgrund ihres Eigenschaftsprofils werden die dotierten Kunststoffmembranen vorzugsweise in Brennstoffzellen verwendet.

Die vorliegende Erfindung betrifft auch eine Membran-Elektroden-Einheit, die mindestens eine erfindungsgemäße Kunststoffmembran aufweist. Für weitere Informationen über Membran-Elektroden-Einheiten wird auf die Fachliteratur, insbesondere auf die Patente US 4,191,618, US 4,212,714 und US 4,333,805 verwiesen, auf deren Offenbarung im Rahmen dieser Anmeldung explizit bezug genommen wird.
Nachfolgend wird die Erfindung durch Beispiele und Vergleichsbeispiele eingehender erläutert, ohne daß die Erfindung auf diese Beispiele beschränkt werden soll.

### 1. Beispiel

a) Herstellung einer PBI-DMAc-Lösung
   ^{®}Celazole der Firma Celanese wird bei Temperaturen von 200 °C über einen Zeitraum von 2-4 Stunden in N,N-Dimethylacetamid (15 % Gewichtsprozent Celazole) gelöst.
b) Herstellung einer Polysulfon-Lösung
   Polysulfon ^{®}Radel-R 5700 der Firma Amoco (oder Polyethersulfon ^{®}Ultrason E 6000 der Fa. BASF) wird in N,N-Dimethylacetamid oder N-Methylpyrrolidon gelöst (15 Gew.-%). Die Polysulfonlösung wird über eine Drucknutsche bei Raumtemperatur filtriert.
c) Herstellung der Polymermischung in Lösung
   Die PBI-DMAc-Lösung und die Polysulfon-Lösung werden bei einer Temperatur von 60 - 95°C mit einem langsam laufenden Ankerrührer gemischt. Niedrigere Temperaturen bzw. hohe Umlaufgeschwindigkeiten des Rührers führen durch den Weissenbergeffekt, den die Polybenzimidazol-Lösung zeigt, zu einer zumindest teilweisen Entmischung der Lösung. Die gemischte Lösung wird durch Anlegen eines Vakuums für einen Zeitraum von mindestens 15 Minuten bei einer Temperatur von 80°C entgast.
d) Herstellung der Kunststoffmembran
   Die Lösung wird auf einer Glasplatte in einer staubarmen Umgebung (Laminar-Flow-Box) in einer Stärke von ca. 250 µm gerakelt und in einem mit einem Staubfilter versehenen Umlufttrockenschrank bei Temperaturen von bis zu 120°C getrocknet. Die getrocknete Kunststoffmembran wird von der Glasplatte abgezogen.
e) Dotierung der Kunststoffmembran
   Die Membran wird 72 Stunden bei Raumtemperatur mit 85 %iger Phosphorsäure benetzt.

### 2. Vergleichsbeispiel

Polyetherketon der Firma Victrex (PEK) wird, wie in DE 19847782 A1 20000420 beschrieben, in das sulfonierte Produkt umgesetzt. Das sulfonierte Produkt hat einen Sulfonierungsgrad von 42 %. Das sulfonsaure Polymer wird durch Rühren in 5 %iger Natronlauge über Nacht bei 50°C in das Natriumsalz überführt, abfiltriert, gewaschen und getrocknet.

Das sulfonsaure Polymer wird in N,N-Dimethylacetamid oder N-Methylpyrrolidon gelöst (15 Gew.-%). Die Polysulfonlösung wird über eine Drucknutsche bei Raumtemperatur filtriert.

Die Lösung des Polymeren wird entsprechend 1.b) durchgeführt. Die Umsetzung des Natriumsalzes in die freie Säure erfolgt durch Behandeln der Blendmembran mit Phosphorsäure. Die Herstellung der Polymermischung in Lösung, der Kunststoffmembran sowie ihre Dotierung wird analog dem obigen Beispiel durchgeführt.

### 3. Bestimmung der Phosphorsäurekonzentration

Die dotieren Membranen werden über Nacht in exakt 1 I destilliertem Wasser gerührt. Dann werden sie aus dem Wasser genommen und 3 Stunden bei 150°C und 20 - 50 mbar getrocknet. Die getrockneten Membranen werden ausgewogen. Der Säuregehalt des Wassers wird durch Titration mit Natronlauge Maßlösung bestimmt.

Aus der Trockenmasse der Membran und den Daten der Titration wird die Anzahl der Säuremoleküle pro Wiederholungseinheit des jeweiligen Polymers berechnet. Die erhaltenen Ergebnisse sind in Tabelle 1 zusammengefaßt.

**Tabelle 1: Dotierungsgrad der Kunststoffmembran**

| **Probe** | **Beimischung** [%] | **H₃PO₄/Wiederholungseinheit** Polymer |
|---|---|---|
| B 1 | 5 % PES | 9,26 |
| B 2 | 10 % PES | 8,75 |
| B 3 | 20 % PES | 8,44 |
| B 4 | 5 % PSU | 9,29 |
| B 5 | 10 % PSU | 8,92 |
| B 6 | 20 % PSU | 7,75 |
| VB 1 | 0% | 9,35 |
| VB 2 | 5 % sPEK | 9,85 |
| VB 3 | 10 % sPEK | 9,51 |
| VB 4 | 20 % sPEK | 8,76 |

| | | |
|---|---|---|
| B: Beispiel; VB Vergleichsbeispiel | | |

### 4. Messung der Leitfähigkeit

Es wurde mit einer 4-Pol-Anordnung unter Verwendung von Platinelektroden (Draht, 0,25 mm Durchmesser), bei Raumtemperatur und einem Zahner IM 6 Impedanzspektrometer gemessen. Das erhaltenen Spektrum wird mit einem einfachen Modell bestehend aus einer Parallelschaltung, aus einem Kondensator und einem Widerstand gefittet. Die Dimensionen der Probe wurden vor der Dotierung bestimmt. Die Ergebnisse sind in Tabelle 2 dargestellt.

**Tabelle 2: Leitfähigkeitsmessungen**

| | | **Fitting-Ergebnisse** | | | | **Membran** | | | | |
|---|---|---|---|---|---|---|---|---|---|---|
| **Probe** | **Beimischung** | **R** | **Fehler** | **Cₚₐᵣ** | **Fehler** | **Dicke** | **Fehler** | **Breite** | **Fehler** | **Leitfähigkeit** |
| | | **[Ohm]** | **[%]** | **[pF]** | **[%]** | **[cm]** | **[%]** | **[cm]** | **[%]** | **[S/cm]** |
| B 1 | 5 % PES | 2004 | 2,67 | 102,2 | 23,16 | 3,2E-03 | 1,0 | 3,5 | 3,0 | 0,0891 |
| B 2 | 10 % PES | 2293 | 2,45 | 119,7 | 17,39 | 3,1E-03 | 1,0 | 3,5 | 3,0 | 0,0804 |
| B 3 | 20 % PES | 2756 | 3,21 | 131,4 | 23,31 | 2,8E-03 | 1,0 | 3,5 | 3,0 | 0,074 |
| B 4 | 5 % PSU | 2395 | 1,58 | 120,5 | 18,21 | 3,3E-03 | 1,0 | 3,5 | 3,0 | 0,072 |
| B 5 | 10 % PSU | 2392 | 2,77 | 127,9 | 10,64 | 3,3E-03 | 1,0 | 3,5 | 3,0 | 0,072 |
| B 6 | 20 % PSU | 2923 | 2,06 | 126,5 | 18,40 | 3,0E-03 | 1,0 | 3,5 | 3,0 | 0,065 |
| VB 1 | 0 | 2091 | 2,72 | 115,9 | 27,52 | 2,9E-03 | 1,0 | 3,5 | 3,0 | 0,094 |
| VB 2 | 05 % sPEK | 2485 | 1,29 | 122,8 | 20,37 | 2,9E-03 | 1,0 | 3,5 | 3,0 | 0,079 |
| VB 3 | 10 % sPEK | 2797 | 0,72 | 123,0 | 15,90 | 2,7E-03 | 1,0 | 3,5 | 3,0 | 0,076 |
| VB 4 | 20 % sPEK | 3191 | 2,64 | 129,1 | 16,21 | 3,2E-03 | 1,0 | 3,5 | 3,0 | 0,056 |

| | | | | | | | | | | |
|---|---|---|---|---|---|---|---|---|---|---|
| B: Beispiel; VB Vergleichsbeispiel PSU (Radel R5700); PES (Ultrason E6000); PEK [M420 (Op.3/99) Na-Salz] | | | | | | | | | | |

### 5. Messung der mechanischen Eigenschaften

Die mechanischen Eigenschaften werden mit Hilfe einer Zwick-Testmaschine (100 N Dose) in einem uniaxialen Zugversuch ermittelt. Die Geometrie des Probenkörpers wird im undotierten Zustand ermittelt. Die Probenbreite beträgt in undotiertem Zustand 15 mm, die Probenlänge zwischen den pneumatisch betriebenen Spannbacken 100 mm.
Die Vorkraft beträgt 0,1 N, die Meßgeschwindigkeit beträgt 100 mm/min.

Die Proben werden in die auf 100°C vorgeheizte Probenkammer eingebaut, die Probenkammer wird verschlossen und die Messung nach exakt 10 Minuten gestartet. Tabelle 3 faßt die Ergebnisse zusammen.

**Tabelle 3: Messungen der mechanischen Eigenschaften**

| **Probe** | **E-Modul** | **Bruchzähigkei** | **Dehnung bei Fₘₐₓ** | **Rₘₐₓ** |
|---|---|---|---|---|
| | **[MPa]** | **t** | **[%]** | **[N/mm²]** |
| | | **[J/m²]** | | |
| B 1 | 8,67 | 37733 | 24,41 | 1,75 |
| B 2 | 8,32 | 32590 | 27,80 | 1,67 |
| B 3 | 8,04 | 47931 | 33,14 | 1,99 |
| B4 | 7,21 | 41715 | 27,25 | 1,60 |
| B 5 | 9,81 | 22473 | 20,22 | 1,62 |
| B 6 | 22,59 | 190428 | 55,90 | 4,66 |
| VB 1 | 7,71 | 23263 | 22,06 | 1,51 |
| VB 2 | 8,27 | 47650 | 33,08 | 1,97 |
| VB 3 | 7,52 | 37561 | 27,87 | 1,93 |
| VB 4 | 6,65 | 47483 | 38,68 | 1,72 |

| | | | | |
|---|---|---|---|---|
| B: Beispiel; VB Vergleichsbeispiel Fₘₐₓ: Kraft im Maximum der Zugspannungs/Dehnungs-Kurve Rₘₐₓ: Reißfestigkeit | | | | |

## Patentansprüche

1. Ein- oder mehrschichtige Kunststoffmembran aufweisend mindestens eine Schicht A aus einem Polymerblend bestehend aus
a) 0,1 bis 99,9 Gew.-% von einem oder mehreren Polymeren, die wiederkehrende Azoleinheiten der allgemeinen Formel 1A und/oder 1 B aufweisen: 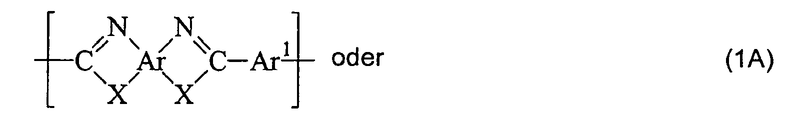 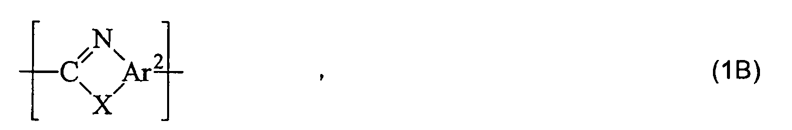 wobei die Reste Ar, Ar¹ und Ar² vier-, zwei- bzw. dreibindige aromatische oder heteroaromatische Gruppen und die Reste X, die innerhalb einer Wiederholungseinheit gleich sind, ein Sauerstoffatom, ein Schwefelatom oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt, sind,
in Mischung mit
b) 99,9 bis 0,1 Gew.-% eines Polysulfons mit wiederkehrenden Einheiten der allgemeinen Formel 2A, 2B, 2C, 2D, 2E, 2F und/oder 2G, das keine Sulfonsäuregruppen aufweist:
-O-R-SO₂-R- (2A)
-O-R-SO₂-R-O-R- (2B)
-O-R-SO₂-R-O-R-R- (2C) 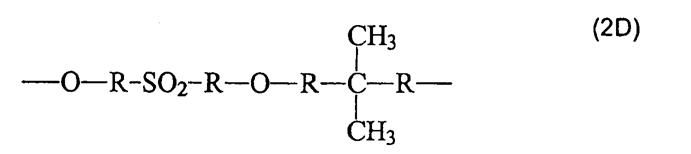
-O-R-SO₂-R-R-SO₂-R- (2E)
-O-R-SO₂-R-R-SO₂-R-O-R-SO₂⁆ (2F)
⁅O-R-SO₂-R⁆⁅SO₂-R-R⁆ (2G),
worin die Reste R unabhängig voneinander gleich oder verschieden 1,2-Phenylen, 1,3-Phenylen, 1,4-Phenylen, 4,4'-Biphenyl, ein zweiwertiger Rest eines Heteroaromaten, ein zweiwertiger Rest eines C₁₀-Aromaten und/oder ein zweiwertiger Rest eines C₁₄-Aromaten sind, **dadurch gekennzeichnet, dass** sie mit einer Säure dotiert ist.

2. Dotierte Kunststoffmembran gemäß Anspruch 1, **dadurch gekennzeichnet, daß** die Anzahl der wiederkehrende Azoleinheiten im Polymer eine ganze Zahl größer gleich 10, insbesondere größer 100, ist.

3. Dotierte Kunststoffmembran gemäß einem der vorangehenden Ansprüche, **dadurch gekennzeichnet, daß** das Polymer a) ein Polymer mit wiederkehrenden Benzimidazoleinheiten der Formel 1C) ist: 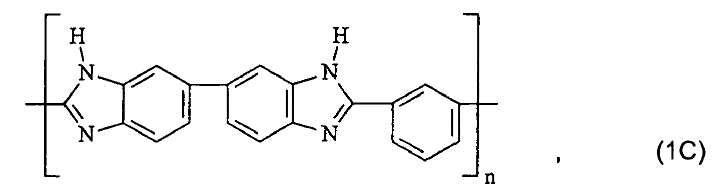 worin n eine ganze Zahl größer gleich 10 ist.

4. Dotierte Kunststoffmembran gemäß einem der vorangehenden Ansprüche, **dadurch gekennzeichnet, daß** das Polysulfon vom Typ ^{®}Victrex 200 P, ^{®}Victrex 720 P, ^{®}Radel, ^{®}Radel R, ^{®}Victrex HTA, ^{®}Astrel oder ^{®}Udel ist.

5. Dotierte Kunststoffmembran gemäß einem oder mehreren der vorhergehenden Ansprüche, **dadurch gekennzeichnet, daß** das Polysulfon vom Typ ^{®}Radel R ist.

6. Dotierte Kunststoffmembran gemäß einem oder mehreren der vorhergehenden Ansprüche, **dadurch gekennzeichnet, daß** die dotierte Kunststoffmembran mit einer anorganischen Lewis- und Brønsted-Säure, vorzugsweise mit Salzsäure, Schwefelsäure und/oder Phosphorsäure dotiert ist.

7. Dotierte Kunststoffmembran gemäß einem oder mehreren der vorhergehenden Ansprüche, **dadurch gekennzeichnet, daß** das Polymerblend aus
a) 50 bis 99 Gew.-% Polymer, das wiederkehrende Azoleinheiten der allgemeinen Formel 1A und/oder 1 B aufweist,
in Mischung mit
b) 1 bis 50 Gew.-% eines Polysulfons mit wiederkehrenden Einheiten der allgemeinen Formel 2A, 2B, 2C, 2D, 2E, 2F und/oder 2G, das keine Sulfonsäuregruppen aufweist,
besteht.

8. Dotierte Kunststoffmembran gemäß einem oder mehreren der vorhergehenden Ansprüche, **dadurch gekennzeichnet, daß** sie mindestens zwei Schichten A und B aufweist, die jeweils aus einem gemäß Anspruch 1 definiertem Polymerblend erhältlich sind und die sich im Gehalt an Polysulfon b) und vorzugsweise in ihrer Dicke voneinander unterscheiden.

9. Dotierte Kunststoffmembran gemäß einem oder mehreren der Ansprüche 1 bis 7, **dadurch gekennzeichnet, daß** sie mindestens drei Schichten A, B und C aufweist, die jeweils aus einem gemäß Anspruch 1 definiertem Polymerblend erhältlich sind, wobei sich die mittlere Schicht C von den beiden äußeren Schichten A und B im Gehalt an Polysulfon b) unterscheidet.

10. Dotierte Kunststoffmembran gemäß Anspruch 9, **dadurch gekennzeichnet, daß** die mittlere Schicht B kein Polysulfon b) enthält.

11. Dotierte Kunststoffmembran gemäß einem oder mehreren der vorhergehenden Ansprüche mit einer Gesamtdicke zwischen 5 und 100 µm.

12. Dotierte Kunststoffmembran gemäß einem oder mehreren der vorhergehenden Ansprüche, **dadurch gekennzeichnet, daß** ihre Protonenleitfähigkeit bei Raumtemperatur oberhalb von 30 mS/cm liegt und ihr E-Modul nach 10 Minuten bei 100°C größer als 10 MPa ist.

13. Verfahren zur Herstellung der dotierte Kunststoffmembran gemäß einem oder mehreren der vorhergehenden Ansprüche, **dadurch gekennzeichnet, daß** man ein gemäß den Ansprüchen definiertes Polymerblend eine geeignete Zeit bei Temperaturen zwischen Raumtemperatur und 100°C und gegebenenfalls bei erhöhtem Druck mit konzentrierter Säure benetzt.

14. Verwendung der dotierten Kunststoffmembran gemäß einem oder mehreren der Ansprüche 1 bis 12 in Brennstoffzellen, bei der Elektrolyse, in Kondensatoren oder in Batteriesystemen.

15. Verwendung gemäß Anspruch 14 in Brennstoffzellen.

16. Membran-Elektrodeneinheit aufweisend mindestens eine Kunststoffmembran gemäß einem der Ansprüche 1 bis 12.

## Claims

1. A single-layer or multilayer plastic membrane comprising at least one layer A of a polymer blend comprising
a) from 0.1 to 99.9 % by weight of one or more polymers comprising recurring azole units of the general formula 1A and/or 1B: 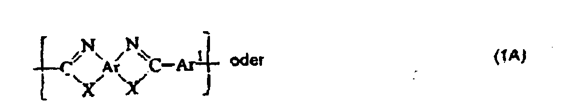 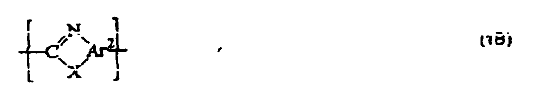 wherein the radicals Ar, Ar¹ and Ar² are tetravalent, divalent or trivalent aromatic or heteroaromatic groups and the radicals X, which are identical within a repeating unit, are an oxygen atom, a sulphur atom or an amino group bearing a hydrogen atom, a group having 1-20 carbon atoms, preferably a branched or unbranched alkyl or alkoxy group, or an aryl group as a further radical, in admixture with
b) from 99.9 to 0.1 % by weight of a polysulfone comprising recurring units of the general formula 2A, 2B, 2C, 2D, 2E, 2F and/or 2G having no sulphonic acid groups:
-O-R-SO₂-R- (2A)
-O-R-SO₂-R-O-R- (2B)
-O-R-SO₂-R-O-R-R- (2C) 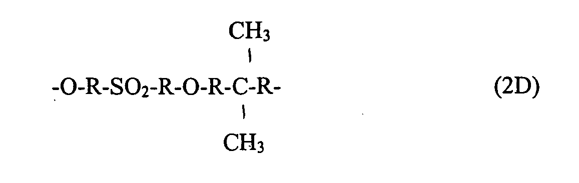
-O-R-SO₂-R-R-SO₂-R- (2E)
-O-R-SO₂-R-R-SO₂-R-O-R-SO₂-1 (2F)
-[-O-R-SO₂-R-]-[-SO₂-R-R-]- (2G)
wherein the radicals R are identical or different and are, independently of one another, 1,2-phenylene, 1,3-phenylene, 1,4-phenylene, 4,4'-biphenyl, a divalent radical of a heteroaromatic, a divalent radical of a C₁₀-aromatic and/or a divalent radical of a C₁₄-aromatic, **characterised in that** they are doped with an acid.

2. The doped plastic membrane according to claim 1, **characterised in that** the number of recurring azole units in the polymer is an integer greater than or equal to 10, in particular greater than 100.

3. The doped plastic membrane according to any one of the preceding claims, **characterised in that** the polymer a) is a polymer with recurring benzimidazole units of the formula 1C): 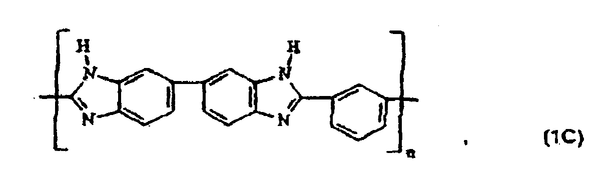 wherein n is an integer greater than or equal to 10.

4. The doped plastic membrane according to any one of the preceding claims, **characterised in that** the polysulfone is of the type ®Victrex 200 P, ®Victrex 720 P, ®Radel, ®Radel R, ®Victrex HTA, ®Astrel or ®Udel.

5. The doped plastic membrane according to one or more of the preceding claims, **characterised in that** the polysulfone is of the type ®Radel R.

6. The doped plastic membrane according to one or more of the preceding claims, **characterised in that** the doped plastic membrane is doped with an inorganic Lewis and Brønsted acid, preferably with hydrochloric acid, sulphuric acid and/or phosphoric acid.

7. The doped plastic membrane according to one or more of the preceding claims, **characterised in that** the polymer blend comprises
a) from 50 to 99 % by weight of a polymer comprising recurring azole units of the general formula 1A and/or 1B,
in admixture with
b) 1 to 50 % by weight of a polysulfone comprising recurring units of the general formula 2A, 2B, 2C, 2D, 2E, 2F and/or 2G which has no sulphonic acid groups.

8. The doped plastic membrane according to one or more of the preceding claims, **characterised in that** it comprises at least two layers A and B which are each obtainable from a polymer blend defined according to claim 1 and which differ from one another in the content of polysulfone b) and preferably in their thickness.

9. The doped plastic membrane according to one or more of claims 1 to 7, **characterised in that** it comprises at least three layers A, B and C which are each obtainable from a polymer blend defined according to claim 1, wherein middle layer C differs from the two outer layers A and B in the content of polysulfone b).

10. The doped plastic membrane according to claim 9, **characterised in that** middle layer B contains no polysulfone b).

11. The doped plastic membrane according to one or more of the preceding claims with a total thickness between 5 and 100 *µ*m.

12. The doped plastic membrane according to one or more of the preceding claims, **characterised in that** its proton conductivity at room temperature is above 30 mS/cm and its E modulus after 10 minutes at 100°C is greater than 10 MPa.

13. A process for producing the doped plastic membrane according to one or more of the preceding claims, **characterised in that** a polymer blend defined according to the claims is wetted with concentrated acid for an appropriate time at temperatures between room temperature and 100° C and, if need be, at raised pressure.

14. The use of the doped plastic membrane according to one or more of claims 1 to 12 in fuel cells, in electrolysis, in capacitors or in battery systems.

15. The use according to claim 14 in fuel cells.

16. A membrane electrode unit comprising at least one plastic membrane according to any one of claims 1 to 12.

## Revendications

1. Membrane en plastique mono- et multicouches qui présente au moins une couche A d'un mélange polymérique consistant en:
a) 0,1 à 99,9 % en poids de l'un ou plusieurs polymères qui présentent des unités répétées d'azoles avec la formule générale 1A et/ou 1B 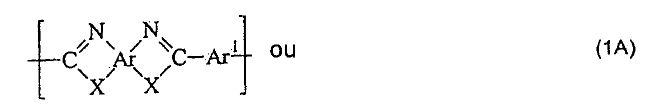 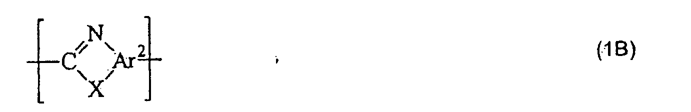 où les restes Ar, Ar¹ et Ar² sont des groupements aromatiques ou hétéroaromatiques respectivement tétra-, bi- et trivalents et les restes X, qui sont identiques dans le cadre d'une unité répétée, sont un atome d'oxygène, un atome de soufre ou un groupement amino, qui portent comme autre reste un atome d'hydrogène, un groupement qui présente 1-20 atomes de carbone, de préférence un groupement alkyle ou alcoxy ramifié ou non-ramifié ou un groupement aryle, en mélange avec:
b) 99,9 à 0,1 % en poids d'une polysulfone avec des unités répétées avec la formule générale 2A, 2B, 2C, 2D, 2E, 2F, et/ou 2G, qui ne présentent pas des groupements d'acide sulfonique:
-O-R-SO₂-R- (2A)
-O-R-SO₂-R-O-R- (2B)
-O-R-SO₂-R-O-R-R- (2C) 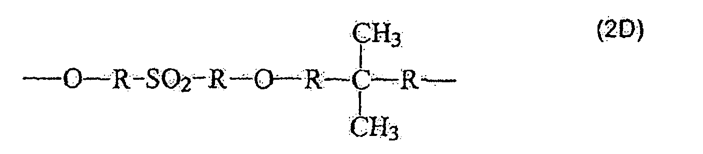
-O-R-SO₂-R-R-SO₂-R- (2E)
-O-R-SO₂-R-R-SO₂-R-O-R-SO₂⁆ (2F)
⁅O-R-SO₂-R⁆⁅SO₂-R-R⁆ (2G),
où les restes R indépendamment les uns des autres sont 1,2-phénylène, 1,3-phénylène, 1,4-phénylène, 4,4'-biphényl, un reste bivalent d'un composé hétéroaromatique, un reste bivalent d'un composé aromatique-C₁₀ et/ou un reste bivalent d'un composé aromatique-C₁₄, identiques ou différents, **caractérisé en ce qu'**elle est dopée avec un acide.

2. Membrane en plastique dopée selon la revendication 1, **caractérisée en ce que** le nombre des unités répétées d'azoles dans le polymère est un nombre entier plus ou égal avec 10, spécialement plus que 100.

3. Membrane en plastique dopée selon l'une des revendications antérieures, **caractérisée en ce que** le polymère a) est un polymère avec unité répétée de benzimidazole avec la formule (1C): 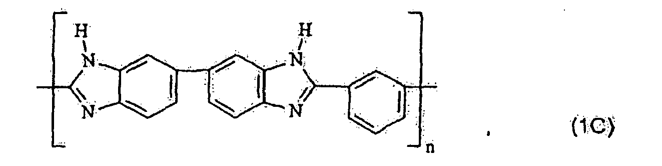 où n est un nombre entier plus ou égal avec 10.

4. Membrane en plastique dopée selon l'une des revendications antérieures, **caractérisée en ce que** la polysulfone est du type ^{®}Victrex 200 P, ^{®}Victrex 720 P, ^{®}Radel, ^{®}Radel R, ^{®}Victrex HTA, ^{®}Astrel ou ^{®}Udel.

5. Membrane en plastique dopée selon l'une ou plusieurs des revendications antérieures, **caractérisée en ce que** la polysulfone est du type ^{®}Radel R.

6. Membrane en plastique dopée selon l'une ou plusieurs des revendications antérieures, **caractérisée en ce que** la membrane en plastique dopée est dopée avec un acide anorganique Lewis et Brönsted, de préférence avec acide chlorhydrique, acide sulfurique et/ou acide phosphorique.

7. Membrane en plastique dopée selon l'une ou plusieurs des revendications antérieures, **caractérisée en ce que** le mélange polymérique consiste en:
a) 50 à 99 % en poids un polymère qui présente des unités répétées d'azoles avec la formule 1A et/ou 1B, en mélange avec:
b) 1 à 50 % en poids d'une polysulfone avec des unités répétées avec la formule générale 2A, 2B, 2C, 2D, 2E, 2F et/ou 2G, qui ne présentent pas des groupements d'acide sulfonique.

8. Membrane en plastique dopée selon l'une ou plusieurs des revendications antérieures, **caractérisée en ce qu'**elle présente au moins deux couches A et B, qui peuvent être obtenues à tout moment d'un mélange polymérique défini selon la revendication 1, qui sont différentes entre elles par la teneur de polysulfone b) et, de préférence, par leur épaisseur.

9. Membrane en plastique dopée selon l'une ou plusieurs des revendications 1 à 7, **caractérisée en ce qu'**elle présente au moins trois couches A, B et C qui peuvent être obtenues à tout moment d'un mélange polymérique défini selon la revendication 1, où la couche moyenne C est distincte des deux couches extérieures A et B par la teneur de polysulfone b).

10. Membrane en plastique dopée selon la revendication 9, **caractérisée en ce que** la couche moyenne B ne contient pas de polysulfone b).

11. Membrane en plastique dopée selon l'une ou plusieurs des revendications antérieures avec une épaisseur totale entre 5 et 100 µm.

12. Membrane en plastique dopée selon l'une ou plusieurs des revendications antérieures, **caractérisée en ce que** sa conductibilité protonique à la température de la chambre se trouve au-dessus de 30mS/cm et son module E, après 10 minutes à 100 °C, est plus de 10 MPa.

13. Procédé pour produire la membrane en plastique dopée selon l'une ou plusieurs des revendications antérieures, **caractérisé en ce qu'**un mélange polymérique défini selon les revendications s'humecte avec un acide concentré un temps adéquat à températures entre la température de la chambre et 100 °C et après le cas à pression agrandie.

14. Utilisation de la membrane en plastique dopée selon l'une ou plusieurs des revendications 1 à 12 dans les cellules de combustion, à l'électrolyse, dans les condenseurs ou dans les systèmes de batteries.

15. Utilisation selon la revendication 14 dans les cellules de combustion.

16. Unité électrode-membrane qui présente au moins une membrane en plastique selon l'une des revendications 1 à 12.
